# EUROPEAN PATENT SPECIFICATION

(11) **EP 4 053 745 B1**
(45) Date of publication and mention of the grant of the patent: **29.04.2026**
(21) Application number: 22160282.4
(22) Date of filing: 04.03.2022
(51) Int. Cl.: G06K 19/077, G06K 19/07, G06K 7/10, G06K 17/00, F16P 3/14, G01S 13/82, A43B 3/40, A43B 3/48, A43B 7/32, B66F 9/075

(54) **WEARABLE ACCIDENT PREVENTION SYSTEM FOR HAZARDOUS AREA OPERATORS BASED ON RFID DEVICES OPERATING AT MULTIPLE FREQUENCIES**
TRAGBARES UNFALLVERHÜTUNGSSYSTEM FÜR ARBEITER IN GEFAHRENBEREICHEN BASIEREND AUF RFID-GERÄTEN, DIE MIT MEHREREN FREQUENZEN ARBEITEN
SYSTÈME PORTABLE DE PRÉVENTION DES ACCIDENTS POUR LES OPÉRATEURS DE ZONES DANGEREUSES BASÉ SUR DES DISPOSITIFS RFID FONCTIONNANT À PLUSIEURS FRÉQUENCES

(30) Priority: 05.03.2021 IT 202100005195
(43) Date of publication of application: 07.09.2022
(73) Proprietor: Salvador, Claudio, 50018 Scandicci (IT); Bonifacio, Filippo, 50134 Firenze (IT)
(72) Inventor: Salvador, Claudio, 50018 Scandicci (IT); Bonifacio, Filippo, 50134 Firenze (IT)
(74) Representative: Savi, Massimiliano

(56) References cited:
- WO-A2-2015/121818
- KR-B1- 100 974 946
- US-A1- 2014 085 125

## Description

### FIELD OF THE INVENTION

The present invention relates to the field of workplace accident prevention devices, in particular to the field of accident prevention devices of the wearable type based on the application of RFID technology.

### BACKGROUND ART

The need to detect the presence of people and items when they are close to particular areas is fundamental for incident and accident prevention systems.

An important example is given by the detection of the position of the operators, to establish the proximity thereof with respect to hazardous areas, a detection that is conventionally implemented by safety systems used in an industrial environment. The main benefit of these systems is to minimize or at least mitigate the risk of collision.

Many systems of this type are present on the market, one of these is described in the patent IT1314992B1 of the Applicant and allows to detect the presence of people and other vehicles close to industrial vehicles, even in motion. This security system features a low consumption TAG that receives a 2.4 GHz or 125 kHz activation signal. Once the activation is received, the TAG responds at a UHF frequency to allow the signaling to the operator on the vehicle.

More examples of systems of the state of the art are described in patent document US2014/085125 disclosing a device for preventing hunting accidents comprising a RF interrogator mounted on the firearm and a RF transponder attached to hunter's hat; in patent document WO2015/121818 disclosing a system for preventing collisions between self-propelled vehicles and obstacles in workplaces based on one or more sensors configured to actuate responders (DR) arranged within a control volume around a vehicle; and in patent document KR100974946 disclosing a system for preventing collision of cranes based on active tags and transceiver suitably installed on the cranes to be monitored.

Systems of this type allow a series of advantages, such as the reactivity and low consumption of the TAG (the battery powering a TAG can last for years). On the other hand, in these systems, the presence of the operator in a certain area is determined by means of threshold mechanisms of the on/off type, for which it is necessary to use very directive activation antennas, capable of covering areas as small as possible to increase spatial resolution.

This represents a problem when the location of the operator must be accurate and relative to more than one area. In this case, in fact, it would be necessary to use different directive antennas, capable of covering different activation areas, with evident repercussions on the complexity and cost of the system.

Other systems available, based on different technologies, for example, the Ultra-wideband (UWB) technology, allow to precisely locate the operator, but have the disadvantage of a high battery consumption that requires a frequent recharging of the devices used. This drawback makes UWB technology devices hardly applicable to the cases in which there is a large number of operators to be monitored, due to the consequent need to manage the recharging of a large number of devices.

An optimal workplace accident prevention system should combine the positive features of the various systems currently available: a low consumption of the TAG device worn by the operator, the localization of the operator close to a risk area, a high reactivity and, in addition, it should be small enough to make the system easily integrated into the usual personal protective devices, such as work clothes, safety shoes and protective helmets that are normally worn by industrial area operators.

### SUMMARY OF THE INVENTION

The present invention uses technology based on RFID devices operating at multiple frequencies to create an incident prevention system for industrial area operators which acts by detecting, within the areas of interest, the presence of items provided with a receiver-transmitter RFID device - called responder or RFID TAG or simply TAG and indicated in the description below as a responder device or, simply, TAG - and by providing an indication of the distance of the TAG device detected by a radio frequency activator, called interrogator, placed in a known position and, hence, the position thereof. The personal protection system described is therefore based on two distinct and cooperating elements: a TAG device to be integrated, for example, into a garment worn by an operator in an area of interest, and one or more coded transmitters placed in strategic points within the area of interest, configured to emit activation signals using one or more transmission frequencies.

The transmitted activation signals are received by the RFID TAGs worn by the operators present in the area of interest and approaching hazardous areas, TAG devices responding on a radio channel that is different with respect to that used for transmitting the activation signals.

A preferred embodiment of the invention described herein comprises a TAG device comprising a low consumption radio receiver configured for activation signals preferably in the bands between VLF and HF or between 3kHz and 30MHz and provided with an antenna. Said radio receiver must be capable of measuring the power of the received signal, assessing, for example, the so called Received Signal Strength Indicator (RSSI). The TAG device will also accommodate supplying means, for example a battery, a processing unit and a transceiver provided with an antenna and preferably operating in the frequency bands between VHF and UHF or between 30 MHz and 3000 MHz.

The low consumption radio receiver antenna is preferably of the loop type and may also be arranged distant from the other components of the TAG device.

Conventional implementations of the system according to the present description are configured to be suitably integrated, for example, into work clothes and safety shoes usually worn by industrial area operators. The small size and the possibility of relocating the low consumption radio receiver antenna at will, allows, for example, to easily install said antenna in the front part of the safety shoe or integrated in the removable insole or in the sole of the shoe itself and the remaining part of the TAG device at the heel. On the other hand, considering the case of a protective helmet, the low consumption radio receiver antenna may be integrated, for example, at the top of the helmet, while the remaining part of the TAG device may be integrated on one side or in the rear part of said helmet.

Specifically, an embodiment of the invention relates to a transponder system comprising an interrogator device and at least one responder device, in which said interrogator device and said responder device are provided with means for communicating through a first and a second channel. The first channel is provided for the activation, by the interrogator device, of the responder device in a predetermined activation area, while the second channel is provided for the data exchange between the responder device and interrogator device. The means for communicating on the first channel comprise a transmission device associated with the interrogator device and a receiving antenna associated with the responder device. The responder device comprises a control unit configured to determine the information to be sent on the second channel to the interrogator device. Specifically, the control unit is configured to calculate a power information of the activation signal transmitted by the interrogator device and to send to the interrogator device said power information on the second channel or, on the basis of said power information, to estimate an information on the distance between the interrogator device and the responder device and send said distance information on the second channel to the interrogator device.

The transmission device is advantageously configured to irradiate according to at least one direction inclined with respect to the direction of maximum reception of the receiving antenna.

In one embodiment, the transmission device comprises a plurality of transmission antennas, each antenna being adapted to transmit a signal with a main lobe of radiation arranged according to a main direction. The main radiation direction of at least one transmission antenna or of all transmission antennas is advantageously inclined with respect to the direction of maximum reception of the receiving antenna.

According to a variant, the transmission antennas are spatially arranged on the interrogator device, or on an element associated therewith, so as to constitute at least one non-aligned spatial referencing triad that emits from spatially distinct areas.

In one embodiment, the transmission device comprises a group of at least three antennas, each antenna being adapted to transmit a signal with a main radiation axis arranged according to a main direction. The main radiation direction of each antenna is orthogonal to the main radiation direction of the other two antennas so as to achieve a transmission substantially according to three orthogonal axes.

The interrogator device may advantageously comprise a multiplexer device such as to allow the driving of the transmission antennas during distinct time periods so as to allow the responder device to discriminate the power contributions coming from each transmission antenna. To this end, the responder device may be configured to measure the power received by the receiving antenna in different time periods so as to associate with each transmission antenna a corresponding power value.

In other embodiments, also the responder device may be, in turn, provided with a plurality of antennas to mitigate the effects of the non-uniformity of the reception due to the reciprocal positions.

The control unit of the responder device may perform various processings. For example, it may be configured to transmit an aggregate power data or an average or the maximum value among the power values calculated on the basis of the signals received by the transmission antennas.

By virtue of this, it is possible to obtain an information on the distance, and possibly on the spatial position in the case of referencing with at least three spatially separated transmission antennas, whatever the position of the receiving antenna positioned on the item to be monitored.

### BRIEF DESCRIPTION OF THE FIGURES

Further features and advantages of the invention will become apparent from the reading of the following detailed description, given by way of non-limiting example, with the aid of the figures shown on the accompanying drawings, in which:
Figure 1 shows a block chart of a preferred embodiment of the wearable accident prevention system according to the present description;
Figure 2 shows some examples of integration of a preferred embodiment of the wearable accident prevention system according to the present description, into garments and accessories worn by the industrial area operators;
Figure 3 diagrammatically shows the field lines of a loop antenna indicating the theoretical zero points of the flow through a parallel loop;
Figure 4 shows the trend of the curve of the power received by a loop arranged on a plane parallel to the plane of the transmission loop as a function of the distance;
Figure 5 shows the trend of the curve of the power received by a loop arranged on a plane orthogonal to the plane of the transmission loop as a function of the distance;
Figure 6 shows the graphs of the previous Figures in the same coordinate system.
Figure 7 shows a block diagram of another preferred embodiment of the wearable accident prevention system according to the present description;
Figure 8 shows a block diagram of another preferred embodiment of the wearable accident prevention system according to the present description;
Figure 9 shows a block diagram of another preferred embodiment of the wearable accident prevention system according to the present description;
Figure 10 shows an example of an arrangement of transmission loops along the perimeter of a cart;
Figure 11 shows a block diagram of another preferred embodiment of the wearable accident prevention system according to the present description, and
Figure 12 shows an embodiment of the wearable accident prevention system according to the present description comprising a TAG device provided with a triad of receiving antennas obtained on a printed circuit and the example of two possible positions on a work shoe.

The following description of exemplary embodiments relates to the accompanying drawings. The same reference numbers in the various drawings identify the same elements or similar elements. The following detailed description does not limit the invention. The scope of the invention is defined by the appended claims.

### DETAILED DESCRIPTION OF THE INVENTION

Operators called upon to act within industrial areas, construction sites, etc. are regularly exposed to the risk of incidents and accidents when they are within hazardous areas. Said hazardous areas must therefore be appropriately signaled to the operators close to said hazardous areas, so that the operators themselves may use the necessary caution and avoid ignoring, due to forgetfulness or ill will, the hazard to which they are exposed.

The workplace accident prevention system according to the present description consists of two distinct and cooperating parts: a TAG device to be integrated, for example, into a garment worn by an operator in an area of interest, and one or more coded transmitters placed in strategic points within the area of interest, configured to emit activation signals using one or more transmission frequencies. The system according to the present description combines the following features: low consumption, a small size such as to allow the integration thereof into usual personal protective equipment, a high reactivity that allows maximum timeliness in signaling alarms and an accurate detection of the distance between the operator and the indicated risk area.

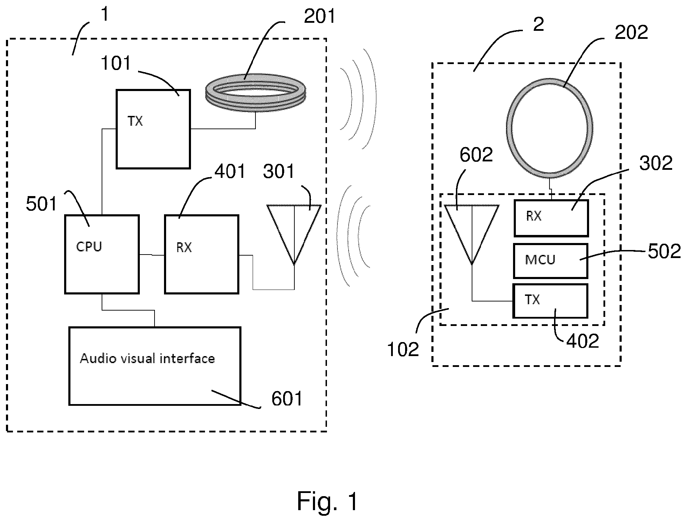

With reference to the appended Figure 1, in a preferred embodiment, the system comprises an activation device 1 and a TAG device 2. The activation device 1 is adapted to be installed at the hazardous areas of the area of interest, for example a vehicle in a warehouse or a fixed machinery in a work area or even an area undergoing maintenance and therefore inaccessible due to being unsafe for operators.

The activation device 1 may comprise at least one high-frequency transmitter 101 connected to a first antenna 201. Said high-frequency transmitter 101 is preferably a microwave transmitter, preferably having a variable and controllable power, and is configured to activate the TAG device 2 from a long distance, typically up to about 40 - 50 meters and even above. By virtue of the variable and controllable power, the activation distance may advantageously be varied by varying the power of the activator. The frequency bands used by the high-frequency transmitter 101 are conventionally greater than 1 GHz. According to the invention, the activation device 1 comprises at least one low-frequency transmitter 101, preferably having variable and controllable power, which activates the TAGs 2 in the proximity, with a conventional distance of about 6 - 12 m. Also, in the case of the use of a low-frequency activator 101 having variable and controllable power, the activation distance may be advantageously changed based on the power of the activator. It is a coded transmitter using low frequencies, for example between 100 and 150kHz, which may be irradiated by means of special inductive antennas. According to the invention, frequencies within the LF (30-300kHz), MF (300-3000kHz) or HF (3-30MHz) bands are used, as in any RFID system of the inductive type. In one embodiment it is also possible to provide for the use of a combination of low and high frequency activators to allow maximum flexibility of application. Preferably, the first antenna is characterized by high directivity, so as to obtain the desired spatial discrimination during the TAG activation step.

The activation device 1 further comprises a second antenna 301 that allows the communication between the activation device 1 and the TAG 2 once this is activated by the signal emitted by the first antenna 201. The second antenna 301 is conventionally a radio frequency antenna of the omnidirectional type, so as to allow a wide-range communication without mutual orientation limits between activation device 1 and TAG 2. The second antenna 301 is connected to a transceiver 401. The activation device 1 is completed by a microprocessor unit 501 and a software that drives the emission of the signal by the first antenna 201, manages the transceiver 401 and performs a series of accessory control functions such as, for example, providing information to an audio-visual interface for signaling the presence of a specific TAG within a specific area with the possible activation of alarms. The operating frequency of the transceiver 401 and of the second antenna 301 is complementary to that of the transmitter 101 and of the first antenna 201 to avoid interference between the two channels, for example in the VHF or UHF range, i.e., between 30 and 3000MHz.

The TAG device 2 consists of a first antenna 202, conventionally a loop antenna, and an electronic board 102 provided with a low consumption radio receiver 302 for activation signals preferably in the bands of the activation device 1 and preferably between VLF and HF, specifically between 3 kHz and 30 MHz. The board will also accommodate a battery and a microprocessor computing unit 502 as well as a transceiver 402 and a second antenna 602 preferably in the bands between VHF and UHF, i.e., between 30 and 3000 MHz in accordance with the band of the transceiver 401 of the activation device 1. A software controls the operation of the various units and, in particular, it processes the signal from the receiver 302 to measure the power of the signal received by the antenna 202 also called Received Signal Strength Indicator (RSSI) with techniques known in the prior art. On the basis of this power information, the microprocessor 502 of the TAG 2 or the microprocessor 501 of the activation device 1 is capable of obtaining an information on the distance between the activated TAG 2 and the activation device 1. In the first case, the microprocessor 502 calculates the distance and sends such information to the activation device 1 on the low consumption communication channel comprising the antennas 602 and 301, in the second case the information sent to the activation device is a power information that the microprocessor 501 processes to provide a distance information to be used in the signaling system 601.

The TAG device 2 is adapted to be integrated into an accessory or into a garment worn by the operators of the area of interest, for example, in the safety shoe 3, in the safety jacket 3' or in the safety helmet 3".

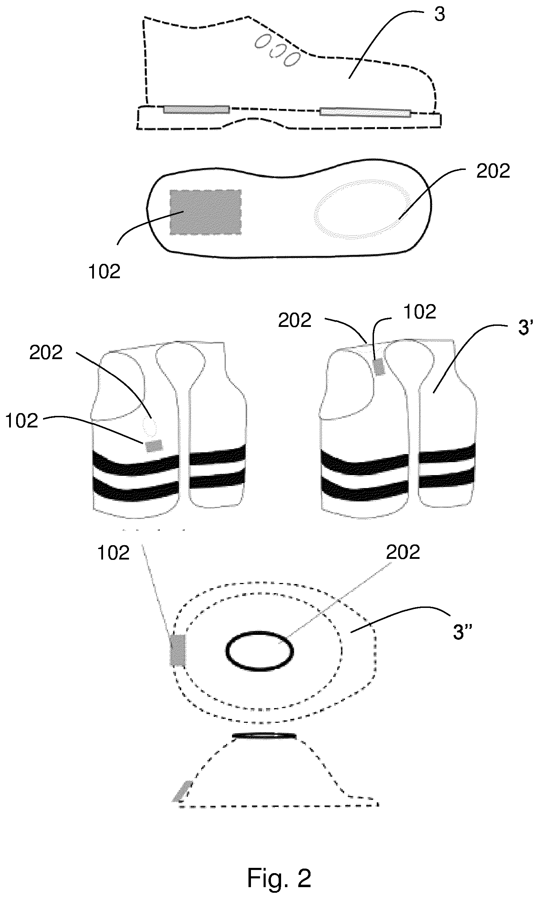

In a particularly advantageous configuration, the antenna 202 adapted to receive the activation signal may be separated from the remaining components and suitably located inside the item whose distance is to be detected. In a work shoe 3, for example, the antenna 202 may be located in the front part while the electronics board 102 may be located under the heel. On the other hand, considering a high-visibility jacket 3', the electronics 102 may be located in a pocket close to the loop 202. In case of a helmet 3", the loop 202 may be placed at the top and the electronics 102 further below, for example, on one side as shown in Figure 2.

TAG 2 may be integrated into the item whose distance is to be detected (for example, directly obtained in a work shoe) or the item may accommodate the TAG device by means of a removable support, such as, for example in the case of the shoe, a insole.

The system just described is capable of performing the function thereof very well, especially if the transmission and receiving loops are parallel and, therefore, ensure maximum coupling. This parallelism, however, is not necessarily always verifiable. While in case of a shoe it is rather simple to ensure parallelism with the ground and, therefore, with a transmission loop also parallel to the ground, this does not apply to a high-visibility jacket with a receiving loop positioned vertically. The movement of the operator will rotate the loop on the vertical axis so that, even by positioning the transmission loop on a vertical plane, the parallelism between the transmission and the receiving loop may not always be ensured.

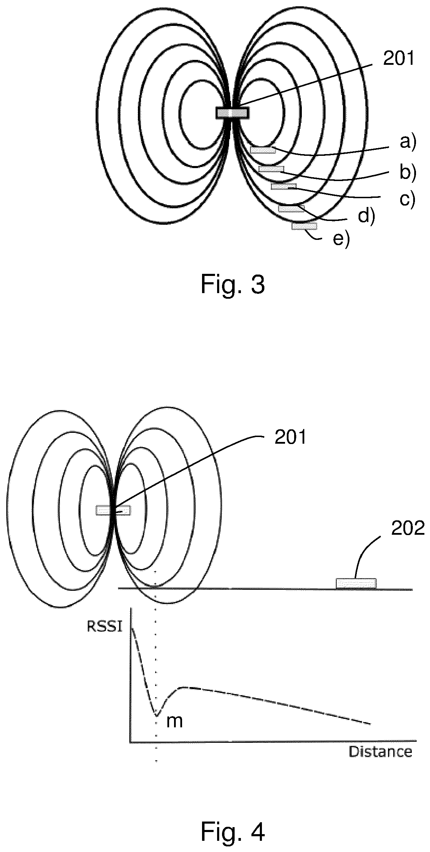

There are also some conditions, rather considerable in terms of application, in which, although the parallelism between the planes of the transmission and receiving antennas is preserved, limitations may arise in detecting the distance. This is due to the fact that the function that links the distance to the power of the received signal is not monotonous. The reason for this behavior is to be found in the shape of the lines of the magnetic field. As it may be seen in the diagrammatic image of Figure 3, the field lines of a transmitting loop 201 have theoretical zero points of the flow in a parallel receiving loop 202 when this is positioned in the points indicated by the letters from a) to e).

This results in a non-monotonous behavior of the received power as the distance varies as shown in Figure 4. Hypothetically, this occurs whenever the antennas, although parallel, are not on the same plane. To better explain the phenomenon, it should be assumed, for example, that a plane placed below with respect to that of the transmitting loop is approached. We will see a signal value (RSSI) that increases until there is a minimum at the indicated point m.

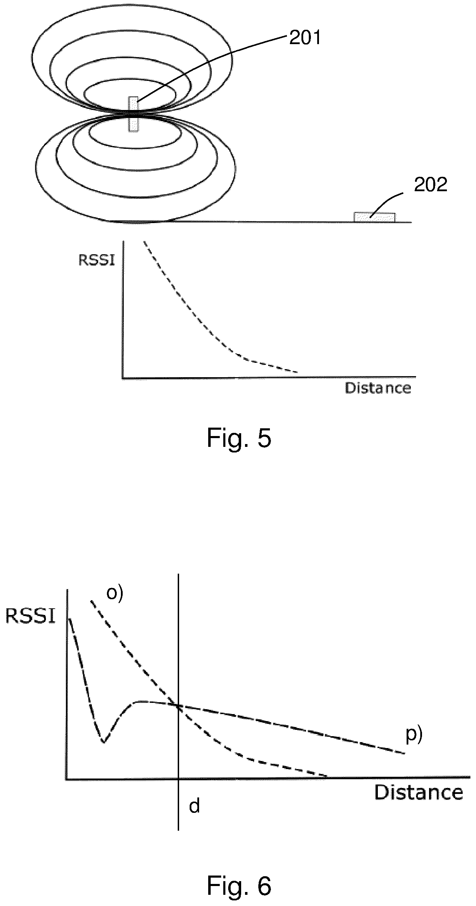

Assuming instead that the transmitting loop 201 is on a plane orthogonal to the plane of the receiving loop 202 and repeating the measurement of the power of the received signal, a different trend is obtained, as shown in Figure 5. Specifically, the power/distance curve is monotonous even with a maximum detectable distance shorter with respect to the case of parallel loops. Furthermore, in the event of orthogonality between the two antennas, if they are at the same height, the detection distance in theory becomes zero.

The two curves, with parallel loops, indicated with p), and with orthogonal loops, indicated with o), are shown together in Figure 6. Assuming to consider the curve o) up to the distance d and the curve p) beyond such distance d, a trend is obtained which is not only monotonous, but also reaches the maximum measurable distance with parallel loops. Hence, the idea of combining information on the power received from differently oriented antennas in the space, to obtain more accurate distance information.

In order to benefit from this effect, therefore, multiple time-division transmission antennas working in sequence or transmission antennas that may be oriented differently with respect to the receiving antennas so as to optimize the signal being received are required.

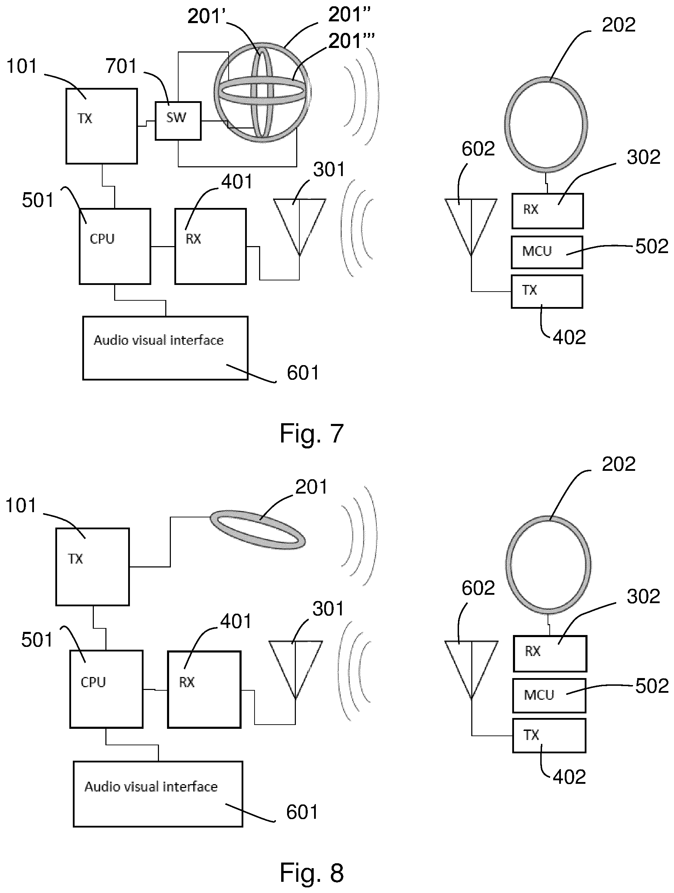

A first way of operating may be to use the diagram of Figure 7. In this case, the transmission of the activation signal occurs by virtue of the use of three loops 201', 201", 201‴ oriented according to three orthogonal planes. The electronics of the activation device 1 is the same as described with reference to Figure 1 with the addition of a multiplexer 701 that sends the transmission signals to each loop at different time instants.

The receiving TAG has the same hardware structure as the TAG described with reference to Figure 1. In this case, the difference consists in the software that has to divide the reception signals into different time slots so as to distinguish the signals transmitted by different antennas and, therefore, measure the powers of activation signals received from different directions.

Once the signal powers from the three activation antennas have been measured, the microcontroller 502 may transmit a distance information obtained by processing the received power information in an aggregate manner or an aggregate power information that the activation device, for example positioned on a cart, may process to obtain the distance information. The simplest way to operate may be to transmit only the maximum power received from the three directions or the distance calculated on the basis of said maximum power information.

The presence of three transmission axes allows, therefore, to standardize the trend of the field received by the loop of the TAG device regardless of the spatial position of the loop itself.

A different system for ensuring the monotonicity of the function expressing power as a function of distance may be the following. We assume to have only receiving loops parallel to the ground, therefore the helmet, shoe and high-visibility jacket configuration with loop on the shoulder. By using a single loop in transmission with a certain inclination with respect to the ground, for example of about 20 degrees, it is possible to obtain a mitigation of the effect of reception zeros. This is due to the fact that there are no situations in which the lines of force generated by the transmission loop are parallel to the plane of the receiving loop. The transmission diagram would therefore become that of Figure 8 which coincides with that of Figure 1 in which the loop 201 is diagrammatically indicated as having a certain inclination with respect to the horizontal plane.

This configuration with a transmission loop inclined with respect to the plane of the receiving loop may be extended to the case of three loops differently oriented in the space referred to in Figure 7.

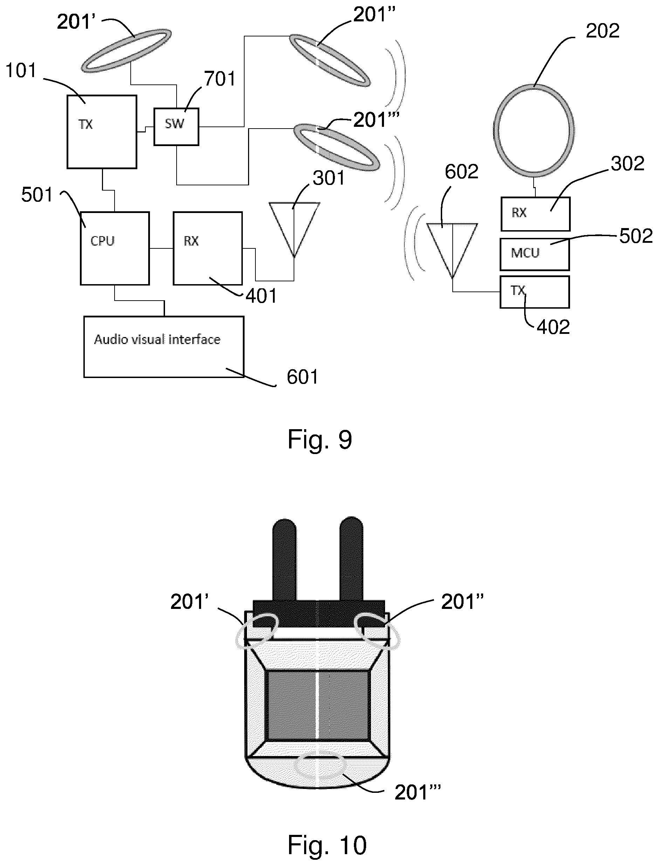

By using a single inclined loop instead of three loops oriented according to orthogonal planes as in the configuration of Figure 7 it is possible to allow the transmission antennas to be arranged at a certain distance from one another to allow triangulations to be carried out using a scheme, for example, as the one shown in Figure 9.

In case of an activation device positioned on a cart, it is possible, for example, to assume positioning the three transmitting loops around the perimeter of the vehicle in the manner shown in Figure 10.

With this approach, the received power may give information not only on the distance, but also on the spatial position, i.e., on the of angular position on the plane with respect to the cart. In fact, from the power received from each antenna the distance with respect to each antenna may be obtained and, by knowing the distance from the three antennas, a triangulation may be carried out to determine the exact position.

Even if the accuracy will not be very high, it is still possible to provide a rough indication to determine if the TAG is in a possible collision route.

The signal provided by an activator on each antenna will consist of a preamble, a start signal and a payload, i.e., the actual message. Once a preamble has been received, the TAG switches into reception mode and listens for a time greater than or equal to the duration of the transmission of the three channels. Thereby, at the end of this time, the power data of the three activators will be available. As far as performance is concerned, a balance must be found with reactivity, since the greater the listening time, the less reactive the system.

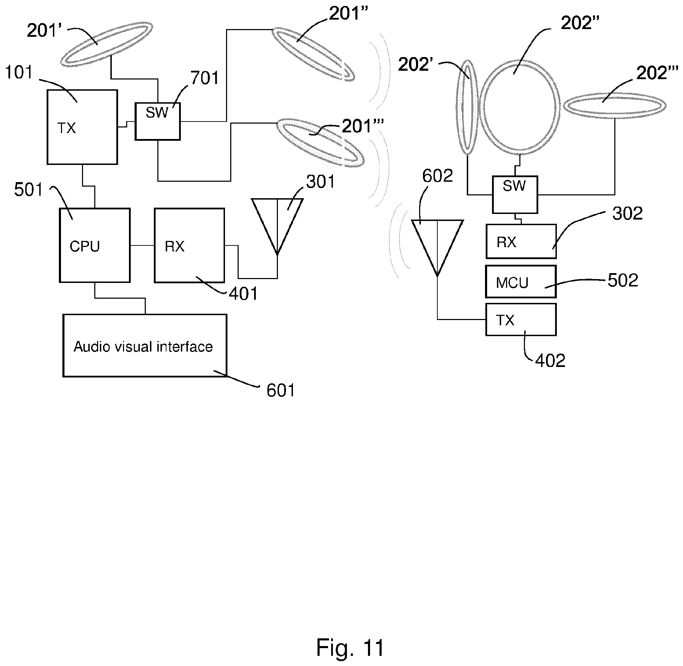

A further different system to ensure monotonicity is to have a plurality of receiving antennas on the responder device, or TAG, keeping a single antenna on each transmitter. With reference to the appended Figure 11, in this case, the TAG will have a triad of antennas, 202', 202", 202"', preferably arranged in mutually orthogonal positions, which receive the signal with different intensities. The electronics of the TAG 2 is the same as described with reference to Figure 9, with the possible addition of a multiplexer 702 adapted to receive the transmission signals to each of the aforesaid antennas 202', 202", 202‴, at different time instants. In a similar manner with respect to the cases previously described, it will then be necessary to process the powers received so as to extract a parameter that is correlated with the distance. In this case, such processing must be performed by the controller on board the TAG and, in the simplest case, the distance value sought may correspond to the maximum of the three values detected by the three antennas. The determined value may therefore be sent back to the receiver on the vehicle that will carry out the necessary signaling actions.

It is clear that the need to have three mutually orthogonal loops imposes, in certain circumstances, that loop antennas of a conspicuous size may not be used, and therefore, in some cases, to the advantage of greater integrability, reception inductances may be used, directly obtained or welded onto the electronics board using components wound on a ferrite core, which have a very small encumbrance.

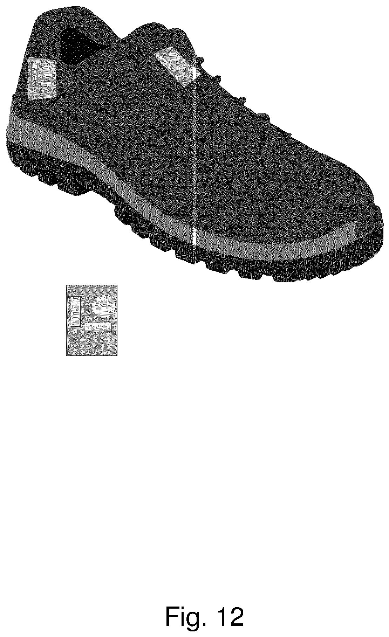

The TAG thus miniaturized, by virtue of to the antennas welded on board, may be advantageously inserted in various points of the protection devices, for example, considering a shoe, into the tongue or the upper as shown in the appended Figure 12.

## Claims

1. A transponder system comprising an interrogator device (1) and at least one responder device (2), wherein said interrogator device (1) and said responder device (2) are provided with means for communicating by means of a first and a second channel, the first channel being provided for the activation by the interrogator device (1) of the responder device (2) in a predetermined activation area and the second channel being provided for the data exchange between the responder device (2) and the interrogator device (1), wherein the means for communicating on the first channel comprise a transmission device (201) associated with the interrogator device (1) and a receiving antenna (202) associated with the responder device (2), said responder device (2) comprising a control unit (502) configured to determine the information to be sent on the second channel to the interrogator device (1), the system being **characterized in that** said interrogator device (1) comprises at least one transmitter (101) operating within the LF band between 30kHz and 300kHz, or within the MF band between 300kHz and 3000kHz or within the HF band between 3MHz and 30MHz, and **in that** said control unit (502) is configured to calculate a power information of the activation signal transmitted by the interrogator device (1) and to send to the interrogator device (1) said power information on the second channel or, on the basis of said power information, to estimate an information on the distance between the interrogator device (1) and the responder device (2) and send said distance information on the second channel to the interrogator device (1).

2. A system according to claim 1, wherein the transmission device (201) is configured to irradiate according to at least one direction inclined with respect to the direction of maximum reception of the receiving antenna (202).

3. A system according to one or more of claims 1 or 2, wherein the transmission device comprises a plurality of transmission antennas (201', 201", 201‴).

4. A system according to claim 3, wherein the main radiation axis of at least one of the antennas of said plurality of transmission antennas (201', 201", 201‴) is inclined with respect to the direction of maximum reception of the receiving antenna (202).

5. A system according to one or more of claims 3 or 4, wherein the transmission antennas (201', 201", 201‴) are spatially arranged on the interrogator device (1), or on an element associated therewith, so as to constitute one non-aligned triad.

6. A system according to one or more of the preceding claims, wherein the transmission device comprises a group of at least three antennas (201', 201", 201‴), each antenna being adapted to transmit a signal with a main radiation axis arranged according to a main direction, the main radiation direction of each antenna being orthogonal to the main radiation direction of the other two antennas so as to achieve a transmission along three orthogonal axes.

7. A system according to one or more of claims 3 to 6, wherein the interrogator device (1) comprises a multiplexer device (701) such as to allow the driving of the transmission antennas (201', 201", 201‴) during distinct time periods so as to allow the responder device (2) to discriminate the power contributions coming from each transmission antenna.

8. A system according to one or more of claims 3 to 7, wherein the responder device (2) is configured to measure the power received by the receiving antenna (201) in different time periods so as to associate with each transmission antenna a corresponding power value.

9. A system according to claim 8, wherein the control unit (502) of the responder device (2) is configured to transmit an aggregate power data or an average or the maximum value among the power values calculated on the basis of the signals received by the transmission antennas (201', 201", 201‴).

10. A system according to one or more of the preceding claims, wherein the responder device (2) comprises a plurality of receiving antennas (202', 202", 202"').

11. A system according to the preceding claim, wherein the antennas of said plurality of receiving antennas (202', 202", 202"') are arranged in mutually orthogonal positions.

12. A system according to one or more of claims 10 to 11, comprising a multiplexer (702) adapted to receive the transmission signals to each of the aforesaid antennas (202', 202", 202"'), at different time instants.

13. A system according to one or more of the preceding claims, wherein the responder device (2) comprises a loop antenna (202) adapted to receive the activation signal and separate electronics (102) adapted to process said signal and to communicate with the activation device (1), said loop antenna (202) and said electronics (102) being arranged in spatially separate positions inside or on an item whose distance is to be determined.

14. A system according to one or more of the preceding claims, wherein the transmission device (201) of the interrogator device (1) comprises three loop antennas (201', 201", 201‴) which are separate and located along the perimeter of a work cart.

15. An accident prevention device **characterized in that** it comprises a responder device (2) provided with means for communicating by means of a first and a second channel and comprises a control unit (502) configured to determine the information to be sent to an interrogator device (1), said responder device (2) and said interrogator device (1) forming a transponder system according to one or more of the preceding claims.

16. An accident prevention device according to the preceding claim implemented in a work garment chosen in the group comprising a work shoe (3), a high-visibility jacket (3'), a helmet (3").

## Patentansprüche

1. Transpondersystem, umfassend eine Abfragevorrichtung (1) und mindestens eine Antwortvorrichtung (2), wobei die Abfragevorrichtung (1) und die Antwortvorrichtung (2) mit Mitteln zur Kommunikation über einen ersten und einen zweiten Kanal versehen sind, wobei der erste Kanal für die Aktivierung der Antwortvorrichtung (2) durch die Abfragevorrichtung (1) in einem vorbestimmten Aktivierungsbereich vorgesehen ist und der zweite Kanal für den Datenaustausch zwischen der Antwortvorrichtung (2) und der Abfragevorrichtung (1) vorgesehen ist, wobei die Mittel zur Kommunikation über den ersten Kanal eine der Abfragevorrichtung (1) zugeordnete Sendevorrichtung (201) und eine der Antwortvorrichtung (2) zugeordnete Empfangsantenne (202) umfassen, wobei die Antwortvorrichtung (2) eine Steuereinheit (502) umfasst, die dazu konfiguriert ist, die Informationen zu bestimmen, die auf dem zweiten Kanal an die Abfragevorrichtung (1) gesendet werden sollen, wobei das System **dadurch gekennzeichnet ist, dass** die Abfragevorrichtung (1) mindestens einen Sender (101) umfasst, der im LF-Band zwischen 30 kHz und 300 kHz oder im MF-Band zwischen 300 kHz und 3000 kHz oder im HF-Band zwischen 3 MHz und 30 MHz arbeitet, und dadurch, dass die Steuereinheit (502) dazu konfiguriert ist, eine Leistungsinformation des von der Abfragevorrichtung (1) gesendeten Aktivierungssignals zu berechnen und die Leistungsinformation auf dem zweiten Kanal an die Abfragevorrichtung (1) zu senden oder auf der Grundlage der Leistungsinformation eine Information über die Entfernung zwischen der Abfragevorrichtung (1) und der Antwortvorrichtung (2) zu schätzen und die Entfernungsinformation auf dem zweiten Kanal an die Abfragevorrichtung (1) zu senden.

2. System nach Anspruch 1, wobei die Sendevorrichtung (201) dazu konfiguriert ist, in mindestens einer Richtung zu strahlen, die in Bezug auf die Richtung des maximalen Empfangs der Empfangsantenne (202) geneigt ist.

3. System nach einem oder mehreren der Ansprüche 1 oder 2, wobei die Sendevorrichtung eine Vielzahl von Sendeantennen (201', 201", 201‴) umfasst.

4. System nach Anspruch 3, wobei die Hauptstrahlungsachse mindestens einer der Antennen der Vielzahl von Sendeantennen (201', 201", 201‴) in Bezug auf die Richtung des maximalen Empfangs der Empfangsantenne (202) geneigt ist.

5. System nach einem oder mehreren der Ansprüche 3 oder 4, wobei die Sendeantennen (201', 201", 201‴) räumlich auf der Abfragevorrichtung (1) oder auf einem dieser zugeordneten Element angeordnet sind, so dass sie eine nicht ausgerichtete Dreiergruppe bilden.

6. System nach einem oder mehreren der vorhergehenden Ansprüche, wobei die Sendevorrichtung eine Gruppe von mindestens drei Antennen (201', 201", 201‴) umfasst, wobei jede Antenne dazu ausgelegt ist, ein Signal mit einer Hauptstrahlungsachse zu senden, die entsprechend einer Hauptrichtung angeordnet ist, wobei die Hauptstrahlungsrichtung jeder Antenne orthogonal zu der Hauptstrahlungsrichtung der beiden anderen Antennen ist, um eine Übertragung entlang drei orthogonaler Achsen zu erreichen.

7. System nach einem oder mehreren der Ansprüche 3 bis 6, wobei die Abfragevorrichtung (1) eine Multiplexervorrichtung (701) umfasst, die ein Ansteuern der Sendeantennen (201', 201", 201‴) während unterschiedlicher Zeiträume ermöglicht, so dass es der Antwortvorrichtung (2) ermöglicht wird, die von jeder Sendeantenne kommenden Leistungsbeiträge zu unterscheiden.

8. System nach einem oder mehreren der Ansprüche 3 bis 7, wobei die Antwortvorrichtung (2) dazu konfiguriert ist, die von der Empfangsantenne (201) zu verschiedenen Zeiträumen empfangene Leistung zu messen, um jeder Sendeantenne einen entsprechenden Leistungswert zuzuordnen.

9. System nach Anspruch 8, wobei die Steuereinheit (502) der Antwortvorrichtung (2) dazu konfiguriert ist, aggregierte Leistungsdaten oder einen Durchschnitts- oder Maximalwert der auf der Grundlage der von den Sendeantennen (201', 201", 201‴) empfangenen Signale berechneten Leistungswerte zu senden.

10. System nach einem oder mehreren der vorhergehenden Ansprüche, wobei die Antwortvorrichtung (2) eine Vielzahl von Empfangsantennen (202', 202", 202‴) umfasst.

11. System nach dem vorhergehenden Anspruch, wobei die Antennen der Vielzahl von Empfangsantennen (202', 202", 202‴) in zueinander orthogonalen Positionen angeordnet sind.

12. System nach einem oder mehreren der Ansprüche 10 bis 11, umfassend einen Multiplexer (702), der dazu ausgelegt ist, die Übertragungssignale zu jeder der vorgenannten Antennen (202', 202", 202‴) zu unterschiedlichen Zeitpunkten zu empfangen.

13. System nach einem oder mehreren der vorhergehenden Ansprüche, wobei die Antwortvorrichtung (2) eine Schleifenantenne (202), die zum Empfangen des Aktivierungssignals ausgelegt ist, und eine separate Elektronik (102) umfasst, die zum Verarbeiten des Signals und zum Kommunizieren mit der Aktivierungsvorrichtung (1) ausgelegt ist, wobei die Schleifenantenne (202) und die Elektronik (102) an räumlich getrennten Positionen innerhalb oder auf einem Gegenstand angeordnet sind, dessen Entfernung bestimmt werden soll.

14. System nach einem oder mehreren der vorhergehenden Ansprüche, wobei die Sendevorrichtung (201) der Abfragevorrichtung (1) drei separate Schleifenantennen (201', 201", 201‴) umfasst, die entlang des Umfangs eines Arbeitswagens angeordnet sind.

15. Unfallverhütungsvorrichtung, **dadurch gekennzeichnet, dass** sie eine Antwortvorrichtung (2) umfasst, die mit Mitteln zur Kommunikation über einen ersten und einen zweiten Kanal versehen ist, und eine Steuereinheit (502) umfasst, die dazu konfiguriert ist, die Informationen zu bestimmen, die an eine Abfragevorrichtung (1) gesendet werden sollen, wobei die Antwortvorrichtung (2) und die Abfragevorrichtung (1) ein Transpondersystem nach einem oder mehreren der vorhergehenden Ansprüche bilden.

16. Unfallverhütungsvorrichtung nach dem vorhergehenden Anspruch, die in einer Arbeitskleidung implementiert ist, die aus der Gruppe ausgewählt ist, die einen Arbeitsschuh (3), eine Warnweste (3'), einen Helm (3") umfasst.

## Revendications

1. Système transpondeur comprenant un dispositif interrogateur (1) et au moins un dispositif répondeur (2), dans lequel ledit dispositif interrogateur (1) et ledit dispositif répondeur (2) sont pourvus de moyens de communication au moyen d'un premier et d'un deuxième canal, le premier canal étant prévu pour l'activation par le dispositif interrogateur (1) du dispositif répondeur (2) dans une zone d'activation prédéterminée et le deuxième canal étant prévu pour l'échange de données entre le dispositif répondeur (2) et le dispositif interrogateur (1), dans lequel les moyens de communication sur le premier canal comprennent un dispositif d'émission (201) associé au dispositif interrogateur (1) et une antenne de réception (202) associée au dispositif répondeur (2), ledit dispositif répondeur (2) comprenant une unité de commande (502) configurée pour déterminer les informations à envoyer sur le deuxième canal au dispositif interrogateur (1), le système étant **caractérisé en ce que** ledit dispositif interrogateur (1) comprend au moins un émetteur (101) fonctionnant dans la bande BF entre 30kHz et 300kHz, ou dans la bande MF entre 300kHz et 3000kHz ou dans la bande HF entre 3MHz et 30MHz, et **en ce que** ladite unité de commande (502) est configurée pour calculer une information de puissance du signal d'activation transmis par le dispositif interrogateur (1) et pour envoyer au dispositif interrogateur (1) ladite information de puissance sur le deuxième canal ou, sur la base de ladite information de puissance, pour estimer une information sur la distance entre le dispositif interrogateur (1) et le dispositif répondeur (2) et envoyer ladite information de distance sur le deuxième canal au dispositif interrogateur (1).

2. Système selon la revendication 1, dans lequel le dispositif de transmission (201) est configuré pour irradier selon au moins une direction inclinée par rapport à la direction de réception maximale de l'antenne de réception (202).

3. Système selon une ou plusieurs des revendications 1 ou 2, dans lequel le dispositif de transmission comprend une pluralité d'antennes de transmission (201', 201", 201‴).

4. Système selon la revendication 3, dans lequel l'axe de rayonnement principal d'au moins une des antennes de ladite pluralité d'antennes de transmission (201', 201", 201‴) est incliné par rapport à la direction de réception maximale de l'antenne de réception (202).

5. Système selon une ou plusieurs des revendications 3 ou 4, dans lequel les antennes de transmission (201', 201", 201‴) sont disposées spatialement sur le dispositif interrogateur (1), ou sur un élément associé à celui-ci, de manière à constituer une triade non alignée.

6. Système selon une ou plusieurs des revendications précédentes, dans lequel le dispositif de transmission comprend un groupe d'au moins trois antennes (201', 201", 201"'), chaque antenne étant adaptée pour transmettre un signal avec un axe de rayonnement principal disposé selon une direction principale, la direction de rayonnement principale de chaque antenne étant orthogonale à la direction de rayonnement principale des deux autres antennes de manière à réaliser une transmission le long de trois axes orthogonaux.

7. Système selon une ou plusieurs des revendications 3 à 6, dans lequel le dispositif interrogateur (1) comprend un dispositif multiplexeur (701) de manière à permettre la commande des antennes de transmission (201', 201", 201‴) pendant des périodes de temps distinctes afin de permettre au dispositif répondeur (2) de discriminer les contributions de puissance provenant de chaque antenne de transmission.

8. Système selon une ou plusieurs des revendications 3 à 7, dans lequel le dispositif répondeur (2) est configuré pour mesurer la puissance reçue par l'antenne de réception (201) dans différentes périodes de temps de manière à associer à chaque antenne de transmission une valeur de puissance correspondante.

9. Système selon la revendication 8, dans lequel l'unité de commande (502) du dispositif répondeur (2) est configurée pour transmettre des données de puissance agrégées ou une valeur moyenne ou maximale parmi les valeurs de puissance calculées sur la base des signaux reçus par les antennes de transmission (201', 201", 201‴).

10. Système selon une ou plusieurs des revendications précédentes, dans lequel le dispositif répondeur (2) comprend une pluralité d'antennes de réception (202', 202", 202‴).

11. Système selon la revendication précédente, dans lequel les antennes de ladite pluralité d'antennes de réception (202', 202", 202‴) sont disposées dans des positions mutuellement orthogonales.

12. Système selon une ou plusieurs des revendications 10 à 11, comprenant un multiplexeur (702) adapté pour recevoir les signaux de transmission vers chacune des antennes susmentionnées (202', 202", 202‴), à des instants temporels différents.

13. Système selon une ou plusieurs des revendications précédentes, dans lequel le dispositif répondeur (2) comprend une antenne cadre (202) adaptée pour recevoir le signal d'activation et une électronique séparée (102) adaptée pour traiter ledit signal et pour communiquer avec le dispositif d'activation (1), ladite antenne cadre (202) et ladite électronique (102) étant disposées dans des positions spatialement séparées à l'intérieur ou sur un élément dont la distance doit être déterminée.

14. Système selon une ou plusieurs des revendications précédentes, dans lequel le dispositif de transmission (201) du dispositif interrogateur (1) comprend trois antennes cadre (201', 201", 201"') qui sont séparées et situées le long du périmètre d'un chariot de travail.

15. Dispositif de prévention des accidents **caractérisé en ce qu'**il comprend un dispositif répondeur (2) muni de moyens pour communiquer au moyen d'un premier et d'un deuxième canal et il comprend une unité de commande (502) configurée pour déterminer les informations à envoyer à un dispositif interrogateur (1), ledit dispositif répondeur (2) et ledit dispositif interrogateur (1) formant un système transpondeur selon une ou plusieurs des revendications précédentes.

16. Dispositif de prévention des accidents selon la revendication précédente, mis en œuvre dans un vêtement de travail choisi dans le groupe comprenant une chaussure de travail (3), un gilet de sécurité (3'), un casque (3").
